# EUROPÄISCHE PATENTSCHRIFT

(11) **EP 4 224 043 B1**
(45) Veröffentlichungstag und Bekanntmachung des Hinweises auf die Patenterteilung: **20.11.2024**
(21) Anmeldenummer: 23154939.5
(22) Anmeldetag: 03.02.2023
(51) Int. Cl.: F16K 1/226

(54) **ABSPERRORGAN FÜR ROHRLEITUNGEN UND DERGLEICHEN**
SHUT-OFF ELEMENT FOR PIPES AND THE LIKE
OBTURATEUR POUR TUYAUX ET SIMILAIRES

(30) Priorität: 07.02.2022 DE 102022102794
(43) Veröffentlichungstag der Anmeldung: 09.08.2023
(73) Patentinhaber: M + S Armaturen GmbH, 26446 Friedeburg (DE)
(72) Erfinder: Saathoff-Kettwig, Günter, 26835 Hesel (DE)
(74) Vertreter: Jabbusch, Matthias

(56) Entgegenhaltungen:
- CH-A- 421 641
- CN-U- 215 445 101
- DE-A1- 102008 020 870
- DE-U1- 29 521 400
- GB-A- 1 544 609
- US-A- 2 923 524
- US-A- 3 534 939
- US-A- 3 666 233

## Beschreibung

Die Erfindung betrifft ein Absperrorgan für Rohrleitungen und dergleichen aufweisend ein Gehäuse, in dem wenigstens eine drehbare Klappenscheibe aufgenommen ist, mit der eine Strömungsquerschnittsfläche des Absperrorgans innerhalb des Gehäuses absperrbar ist, und mit einer die Strömungsquerschnittsfläche im Bereich des Absperrorgans begrenzenden Dichtung, wobei die Dichtung zweiteilig aus aneinander anliegenden Ringkörpern gebildet ist, wobei die Ringkörper der Dichtung konzentrisch zueinander ausgerichtet sind.

### Stand der Technik:

D1 US 2 923 524 A
D2 US 3 534 939 A
D3 CN 215 445 101 U
D4 GB 1 544 609 A
D5 DE 10 2008 020870 A1
D6 US 3 666 233 A
D7 DE 295 21 400 U1 1
D8 CH 421 641 A

Eine Herausforderung bei der Abdichtung entsprechender Absperrorgane, insbesondere Absperrklappen, besteht darin, die zwischen dem Gehäuse und der Klappenscheibe anzuordnende Dichtung dauerhaft gegen ein durchzuleitendes Medium dicht und in Position zu halten. Aufgrund von Verunreinigungen, Verschleiß und begrenzter Beständigkeit, die zu Leckagen führen, müssen weichdichtende Dichtungen, insbesondere aus Gummi, zudem regelmäßig ersetzt werden.

Solche weichen Dichtungen sind unter anderem in der D1 oder der D7 beschrieben, bei denen jeweils eine Welle der jeweiligen Klappenscheibe durch diese hindurchgeführt ist und die daher eine bestimmte Flexibilität erfordern. Aus der D3, D5, D6 sind jeweils verschleißarme Dichtungen von Absperrorganen bekannt, bei denen zueinander symmetrische Dichtringe beiderseits an einen Wellenschaft einer Klappenscheibe angesetzt werden. Hierbei kann es jedoch zu Undichtigkeiten kommen.

Gemäß der D2 werden zueinander symmetrische Dichtringe aufwendig mit einer exzentrisch zu deren Welle gelagerten Klappenscheibe und konischen Anlageflächen der Dichtringe für die Klappenscheibe kombiniert, um eine bessere Abdichtung zu erreichen. Bei der D4 wird eine Klappenscheibe gegen einen in die Strömungsquerschnittsfläche des Absperrorgans hineinragenden Dichtring gedrückt, wobei dieser wiederum eine Durchführung für die Welle aufweist und aus einem flexiblen Material gefertigt ist.

D8 offenbart ein Absperrorgan nach dem Oberbegriff des Anspruchs 1.

Die Aufgabe der Erfindung besteht dementsprechend darin, ein Absperrorgan bereitzustellen, das einerseits eine gute Abdichtung gegen ein durch das Absperrorgan zuleitendes Medium gewährleistet und andererseits eine dauerhafte, wartungsarme und konstruktiv einfache Lösung darstellt.

Die Lösung dieser Aufgabe erfolgt mit den Merkmalen des Anspruchs 1. Weiterbildungen und vorteilhafte Ausgestaltungen sind in den nachgeordneten Ansprüchen angegeben.

Das Absperrorgan für Rohrleitungen und dergleichen aufweisend ein Gehäuse, in dem wenigstens eine drehbare Klappenscheibe aufgenommen ist, mit der eine Strömungsquerschnittsfläche des Absperrorgans innerhalb des Gehäuses absperrbar ist, und mit einer die Strömungsquerschnittsfläche im Bereich des Absperrorgans begrenzenden Dichtung, wobei die Dichtung zweiteilig aus aneinander anliegenden Ringkörpern gebildet ist, wobei die Ringkörper der Dichtung konzentrisch zueinander ausgerichtet sind, wobei ein erster Ringkörper der Dichtung eine größere Ringkörperbauhöhe aufweist als ein zweiter Ringkörper der Dichtung, wobei die die Dichtung bildenden Ringkörper außermittig zu einer geschlossenen Stellung der Klappenscheibe aneinanderstoßen, und wobei sich ein Wellenschaft der Klappenscheibe durch die gesamte Klappenscheibe erstreckt. Der zweiteilige Aufbau der Dichtung ermöglicht, dass diese, unabhängig von dem Material aus dem die Dichtung gefertigt ist, auf einfache Weise beidseitig an die Klappenscheibe angelegt werden kann. Indem ein erster Ringkörper der Dichtung eine größere Ringkörperbauhöhe aufweist als ein zweiter Ringkörper der Dichtung, ist erreicht, dass Dichtung und Klappenscheibe besonders dicht abschließen.

Der zweiteilige Aufbau der Dichtung mit unterschiedlich dicken Ringkörpern führt dazu, dass die die Dichtung bildenden Ringkörper außermittig zu einer geschlossenen Stellung der Klappenscheibe aneinanderstoßen. Die geschlossene Klappenscheibe liegt damit nur an einem der beiden Ringkörper an beziehungsweise wird nur gegen den einen Ringkörper der Dichtung gedrückt, wodurch auf einfache Weise eine dauerhafte Abdichtung erreicht ist. Um die Klappenscheibe betätigen zu können, das heißt drehen zu können, ist nach einer Weiterbildung vorgesehen, dass die Dichtung wenigstens eine Ausnehmung für einen Wellenschaft der Klappenscheibe aufweist. Eine erfindungsgemäße besonders sichere Führung und Verankerung der Klappenscheibe in deren vorbestimmter Position ist dabei erreicht, wenn sich der Wellenschaft durch die gesamte Klappenscheibe erstreckt. Er kann an einander gegenüberliegenden Enden in dem Gehäuse aufgenommen und gehalten sein. Entsprechend sind dann zwei der Ausnehmungen in der Dichtung vorzusehen.

Auf einfache Weise kann die Ausnehmung oder können die Ausnehmungen für den Wellenschaft durch an den jeweils einander zugewandten Seiten der Ringkörper der Dichtung an den Wellenschaft angeformte Bereiche gebildet sein. In Draufsicht bilden die angeformten Bereiche dann jeweils Kreissegmente aus, wobei jede Ausnehmung durch zwei unterschiedlich große Kreissegmente gebildet ist, die zusammen einen vollständigen Kreis bilden.

Um die Dichtung des Absperrorgans auch zu dem Wellenschaft sicher abzudichten, ist gemäß einer ersten bevorzugten Ausführung vorgesehen, dass der Ausnehmung für den Wellenschaft wenigstens eine umlaufende Ringnut in der Dichtung zugeordnet ist. In der Ringnut ist dann ein O-Ring angeordnet, der entlang des Umfangs des Wellenschafts an diesem dichtend anliegt. Alternativ oder ergänzend dazu kann gemäß einer zweiten bevorzugten Ausführung vorgesehen sein, dass der Wellenschaft in einem Bereich der Ausnehmung der Dichtung wenigstens eine umlaufende Ringnut aufweist. Auch können die Dichtung und der Wellenschaft jeweils zusammenwirkende Ringnuten aufweisen, die gemeinsam einen O-Ring zwischen sich aufnehmen.

Nach einer Weiterbildung weisen die Ringkörper der Dichtung entlang ihres Umfangs, insbesondere ihres äußeren aneinander anliegenden Umfangs, einen formschlüssig ineinandergreifenden Versatz auf. Dieser Versatz stellt sicher, dass die Ringkörper passgenau, das heißt konzentrisch zueinander, in dem Absperrorgan zusammengeführt und flächig gegeneinander verpresst werden können.

In weiterer Ausgestaltung ist der Versatz durch einen vorstehenden Teil des Ringkörpers mit der geringeren Ringkörperbauhöhe und einen entsprechend abgestuften, rückgesetzten Bereich des Ringkörpers mit der breiteren Ringkörperbauhöhe gebildet ist. Der Ringkörper mit der geringeren Ringkörperbauhöhe kann dadurch an seiner Außenseite eine höhere Ringkörperbauhöhe und dadurch eine höhere Stabilität aufweisen, ohne dass eine zwischen den gegeneinander verpressten Ringkörpern gebildete Stoßnaht in Richtung der geschlossenen Klappenscheibe rückt.

Nach einer Weiterbildung ist die Dichtung zudem in dem Gehäuse in einem Dichtungssitz verpresst, der an seiner von der Strömungsquerschnittsfläche abgewandten Seite eine größere Weite als an seiner der Strömungsquerschnittsfläche zugewandten Seite aufweist. Die zur Strömungsquerschnittsfläche hin geringere Weite des Dichtungssitzes gewährleistet, dass die in das Gehäuse eingebrachte Dichtung weder verrutscht noch verloren geht. Hierzu kann sich der Dichtungssitz beispielsweise konusartig in Richtung der Strömungsquerschnittsfläche beziehungsweise der Klappenscheibe verjüngen, an seiner von der Strömungsquerschnittsfläche abwandten Seite wulstartig verbreitert sein oder auch Stufen aufweisen, die den Dichtungssitz in Richtung der Strömungsquerschnittsfläche hinterschneiden.

Ein besonders guter und dauerhafter Sitz der Dichtung in dem Gehäuse ist zudem erreicht, indem die Dichtung beziehungsweise die Ringkörper der Dichtung aus einem formbeständigen Material bestehen, insbesondere PTFE bestehen. Dieses zeichnet sich zudem durch eine hohe chemische Beständigkeit, einen geringen Reibungskoeffizienten und eine vergleichsweise geringe Ausdehnung aus.

Weiter kann die Dichtung nach einer Weiterbildung wenigstens eine rückseitige Kammer aufweisen oder in dem Gehäuse, insbesondere dem Dichtungssitz des Gehäuses, eine rückseitige Kammer ausbilden. Rückseitig bedeutet dabei von der Strömungsquerschnittsfläche abgewandt oder zumindest nicht in Kontakt mit der Strömungsquerschnittsfläche stehend. Eine solche Kammer bildet dann eine Dehnungsreserve, so dass Spannungen in dem Material der Dichtung oder der geschlossenen Klappenscheibe, die sich zumindest geringfügig in die Dichtung hineindrückt aufgenommen werden. Insbesondere kann die Kammer ein Hohlraum sein, der sich zwischen den Ringkörpern und dem Dichtungssitz erstreckt. Alternativ zu einem Hohlraum kann die Kammer auch mit einem Elastomer oder einem anderen gleichwirkenden Material gefüllt sein.

Um möglicherweise auftretende Spannungen entlang des Umfangs der Ringkörper möglichst gleichmäßig aufnehmen zu können, ist nach einer Weiterbildung vorgesehen, dass sich die Kammer umlaufend von einem Bereich mit einer Ausnehmung für einen Wellenschaft zu einem nächsten Bereich mit einer Ausnehmung für einen Wellenschaft erstreckt. Der wenigstens eine Bereich mit der Ausnehmung ohne rückseitige Kammern bewirkt einen Anpressdruck gegen die Klappenscheibe, so dass Undichtigkeiten im Bereich des durch die Dichtung geführten Wellenschafts entgegengewirkt ist. Die Klappenscheibe kann dabei nach einer Weiterbildung in dem Bereich wulstartig verbreitert sein, insbesondere auf ein Maß gleich der Gesamtbauhöhe der Dichtung, um eine entsprechende Anpressfläche auszubilden.

Ein Ausführungsbeispiel der Erfindung, aus dem sich weitere erfindungswesentliche Merkmale ergeben können, ist in der Zeichnung dargestellt. Gleiche Teile sind dabei jeweils mit gleichen Bezugszeichen versehen. Es zeigen:
- Fig. 1:: eine perspektivische Darstellung eines erfindungsgemäßen Absperrorgans mit einem teilgeöffneten Gehäuse;
- Fig. 2:: eine erste Detailansicht der Dichtung des Absperrorgans gemäß Fig. 1 im Querschnitt;
- Fig. 3:: eine zweite Detailansicht der Dichtung des Absperrorgans gemäß Fig. 1 im Querschnitt;
- Fig. 4:: eine perspektivische Darstellung der erfindungsgemäßen Dichtung gemäß Fig. 1 bis Fig. 3; und
- Fig. 5:: einen Querschnitt durch eine alternative Ausführung des erfindungsgemäßen Absperrorgans.

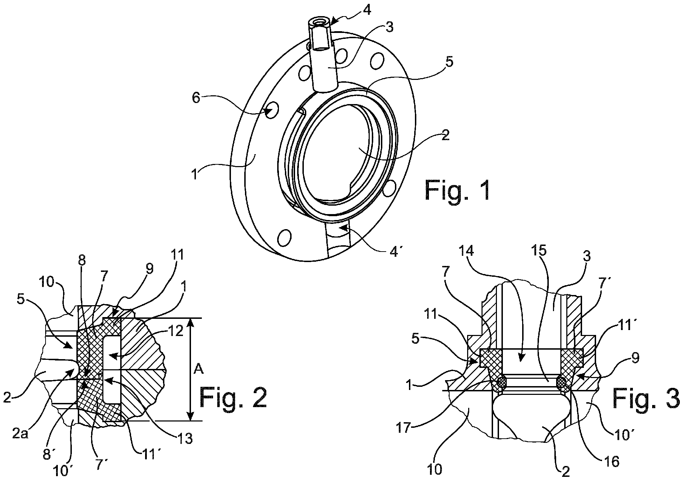

Aus Fig. 1 ist ein erfindungsgemäßes Absperrorgan mit einem äußeren Gehäuse 1 ersichtlich. In dem Gehäuse 1 ist eine Klappenscheibe 2 angeordnet, mit der eine Strömungsquerschnittsfläche für ein durchzuführendes Medium innerhalb des Gehäuses 1 absperrbar ist. Die Klappenscheibe 2 ist an einem Wellenschaft 3 gehalten, der an einander gegenüberliegenden Seiten der Klappenscheibe 2 aus der Strömungsquerschnittsfläche herausgeführt ist, wobei ein erstes Ende 4 antriebsseitig aus dem Gehäuse 1 herausgeführt ist und ein zweites Ende 4' durch einen Stutzen gebildet ist, der in dem Gehäuse 1 endend gelagert ist.

Zwischen dem Gehäuse 1 und der Klappenscheibe 2 ist weiter eine Dichtung 5 ersichtlich. Weiter sind der Fig. 1 Flanschverbindungsdurchbrüche 6 in einer flanschartigen Verbreiterung des Gehäuses 1 zu entnehmen.

In Fig. 2 ist der Bereich zwischen dem Gehäuse 1 und der Strömungsquerschnittsfläche mit der in dieser angeordneten Klappenscheibe 2 gezeigt. Dabei wird der Aufbau der Dichtung 5 aus zwei Ringkörpern 7, 7' ersichtlich. Die Ringkörper 7, 7' sind jeweils konzentrisch zu einer Mittenachse des Absperrorgans beziehungsweise der Strömungsquerschnittsfläche angeordnet und liegen mit Anlageflächen 8, 8' flächig aneinander an. Die Ringkörper 7, 7' weisen unterschiedliche Ringkörperbauhöhen auf, so dass diese mit ihren Anlageflächen 8, 8' ausgehend von einer Gesamtbauhöhe A der Dichtung 5 außermittig angeordnet sind. Die mittig zu der Gesamtbauhöhe A der Dichtung 5 in der Zeichnung in deren geschlossener Position angeordnete Klappenscheibe 2 liegt damit mit dem mit der Dichtung 5 in Kontakt stehenden Randbereich 2a nur an dem Ringkörper 7 an, der die größere Ringkörperbauhöhe der beiden Ringkörper 7, 7' aufweist.

Die Dichtung 5 ist weiter vollständig in einem Dichtungssitz 9 des zweiteiligen Gehäuses 1 aufgenommen, wobei die Strömungsquerschnittsfläche des Absperrorgans im Bereich der Dichtung 5 gleich zu Strömungsquerschnittsflächen von an die Dichtung 5 anschließenden Leitungsabschnitten 10, 10' ist. Der Dichtungssitz 9 ist so geformt, dass dieser zur Strömungsquerschnittsfläche und Klappenscheibe 2 hin eine sich verjüngende Weite aufweist. An dem von der Klappenscheibe 2 und Strömungsquerschnittsfläche abgewandten Bereich des Dichtungssitzes 9 ist zudem in Richtung des Gehäuses 1 je Seite des Dichtungssitzes 9 eine vorkragende Stufe ausgebildet, in die wulstartige Verbreiterungen 11, 11' der Ringkörper 7, 7' eingreifen und die Dichtung 5 in deren vorbestimmter Position sichern. Zwischen den wulstartigen Verbreiterungen 11, 11' ist eine Kammer 12 ausgebildet, die von der Dichtung 5 und dem Gehäuse 1 begrenzt ist und die eine Dehnungsreserve darstellt. An den Anlageflächen 8, 8' weisen die Ringkörper 7, 7' an der von der Strömungsquerschnittsfläche und der Klappenscheibe 2 abgewandten Seite zudem einen formschlüssig ineinandergreifenden Versatz 13 auf, wobei ein Vorsprung des Ringkörpers 7' mit der geringeren Ringkörperbauhöhe in einen rückgesetzten Abschnitt des Ringkörpers 7 mit der größeren Ringkörperbauhöhe eingreift.

Aus der Detaildarstellung gemäß Fig. 3 ist ersichtlich, wie der Wellenschaft 3 durch eine Ausnehmung 14 der Dichtung 5 geführt ist. Sowohl der Wellenschaft 3 als auch die Ringkörper 7, 7' der Dichtung 5 weisen dabei eine jeweils zusammenwirkende Ringnut 15, 16 auf. Ein in die Ringnute 15, 16 eingesetzter O-Ring 17 ragt somit sowohl entsprechend der Breite der Ringnut 15 in den Wellenschaft 3 als auch entsprechend der Breite der Ringnut 16 in den jeweiligen Ringkörper 7, 7'. Die Klappenscheibe 2 ist im Bereich der Ausnehmung 14 zudem wulstartig auf ein Maß verbreitert, das größer als der Durchmesser des Wellenschafts 3 ist. Insbesondere ist das Maß des wulstartigen Abschnitts der Klappenscheibe 2 gleich der Bauhöhe der an die Strömungsquerschnittsfläche angrenzenden Dichtung 5 also gleich der aufaddierten Ringkörperbauhöhen.

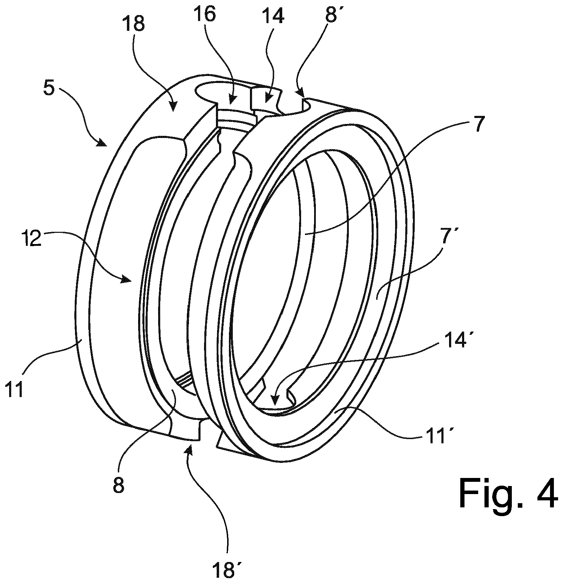

Der Aufbau der Dichtung 5 ist insbesondere nochmals aus Fig. 4 ersichtlich. Neben den bereits beschriebenen Merkmalen zeigt Fig. 4 auch wie die außenseitig an den Ringkörpern 7, 7' ausgebildeten Kammern 12 zu den Ausnehmungen 14 für den Wellenschaft 3 angeordnet sind. Die Kammern 12 erstrecken sich dabei jeweils von einem Bereich 18 mit der Ausnehmung 14 für den Wellenschaft 3 bis zum gegenüberliegenden, nächsten Bereich 18' mit der Ausnehmung 14' für den Wellenschaft 3. Die Bereiche 18, 18' mit den Ausnehmungen 14, 14' bilden dabei Anpressflächen aus, gegen die die wulstartigen Abschnitte der Klappenscheibe 2 im Bereich des Wellenschafts 3 drücken.

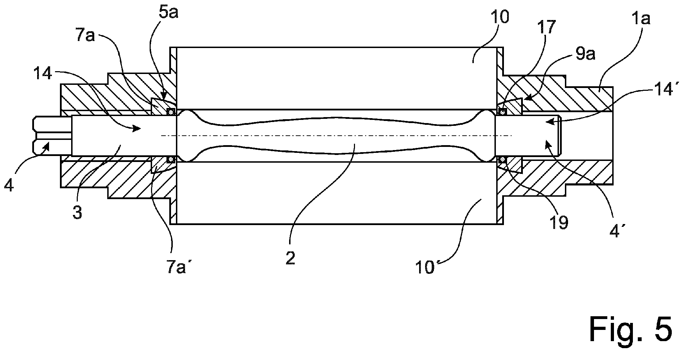

Fig. 5 zeigt schließlich eine alternative Ausführung, bei der sich eine Dichtung 5a im Unterschied zu der vorangegangenen Ausführung gemäß Fig. 1 bis Fig. 4 in Richtung der Strömungsquerschnittsfläche mit der Klappenscheibe 2 hin konisch verjüngt. Gehäuse 1a, Dichtungssitz 9a sowie die Ringkörper 7a, 7a` der Dichtung 5a weisen eine entsprechend angepasste Geometrie auf. Weiter ist der O-Ring 17 zum Abdichten der Ausnehmungen 14, 14' für den Wellenschaft 3a lediglich in einer Ringnut 19 angeordnet, die vollständig in der Dichtung 5a angeordnet ist.

## Patentansprüche

1. Absperrorgan für Rohrleitungen und dergleichen aufweisend ein Gehäuse (1, 1a), in dem wenigstens eine drehbare Klappenscheibe (2) aufgenommen ist, mit der eine Strömungsquerschnittsfläche des Absperrorgans innerhalb des Gehäuses (1, 1a) absperrbar ist, und mit einer die Strömungsquerschnittsfläche im Bereich des Absperrorgans begrenzenden Dichtung (5, 5a), wobei die Dichtung (5, 5a) zweiteilig aus aneinander anliegenden Ringkörpern (7, 7a, 7', 7a') gebildet ist, wobei die Ringkörper (7, 7a, 7', 7a') der Dichtung (5, 5a) konzentrisch zueinander ausgerichtet sind,
wobei ein erster Ringkörper (7, 7a) der Dichtung (5, 5a) eine größere Ringkörperbauhöhe aufweist als ein zweiter Ringkörper (7', 7a') der Dichtung (5),
wobei die die Dichtung (5, 5a) bildenden Ringkörper (7, 7a, 7', 7a') außermittig zu einer geschlossenen Stellung der Klappenscheibe (2) aneinanderstoßen, **dadurch gekennzeichnet,**
**dass** sich ein Wellenschaft (3) der Klappenscheibe (2) durch die gesamte Klappenscheibe (2) erstreckt.

2. Absperrorgan nach Anspruch 1, **dadurch gekennzeichnet, dass** die Dichtung (5, 5a) wenigstens eine Ausnehmung (14, 14') für den Wellenschaft (3) der Klappenscheibe (2) aufweist.

3. Absperrorgan nach Anspruch 2, **dadurch gekennzeichnet, dass** die Ausnehmung (14, 14') für den Wellenschaft (3) durch an den jeweils einander zugewandten Seiten der Ringkörper (7, 7a, 7', 7a') der Dichtung (5, 5a) an den Wellenschaft (3) angeformte Bereiche gebildet ist.

4. Absperrorgan nach einem der Ansprüche 2 oder 3, **dadurch gekennzeichnet, dass** der Ausnehmung (14, 14') für den Wellenschaft (3) wenigstens eine umlaufende Ringnut (16, 19) in der Dichtung (5, 5a) zugeordnet ist.

5. Absperrorgan nach einem der Ansprüche 2 bis 4, **dadurch gekennzeichnet, dass** der Wellenschaft (3) in einem Bereich (18, 18') der Ausnehmung (14, 14') der Dichtung (5, 5a) wenigstens eine umlaufende Ringnut (15) aufweist.

6. Absperrorgan nach einem der Ansprüche 1 bis 5, **dadurch gekennzeichnet, dass** die Ringkörper (7, 7a, 7', 7a') der Dichtung (5, 5a) entlang ihres Umfangs, insbesondere ihres äußeren aneinander anliegenden Umfangs, einen formschlüssig ineinandergreifenden Versatz (13) aufweisen.

7. Absperrorgan nach Anspruch 6, **dadurch gekennzeichnet, dass** der Versatz (13) durch einen vorstehenden Teil des Ringkörpers (7`, 7a') mit der geringeren Ringkörperbauhöhe und einen entsprechend abgestuften Bereich des Ringkörpers (7, 7a) mit der breiteren Ringkörperbauhöhe gebildet ist.

8. Absperrorgan nach einem der Ansprüche 1 bis 7, **dadurch gekennzeichnet, dass** die Dichtung (5, 5a) in dem Gehäuse (1, 1a) in einem Dichtungssitz (9, 9a) verpresst ist, der an seiner von der Strömungsquerschnittsfläche abgewandten Seite eine größere Weite als an seiner der Strömungsquerschnittsfläche zugewandten Seite aufweist.

9. Absperrorgan nach einem der Ansprüche 1 bis 8, **dadurch gekennzeichnet, dass** die Dichtung (5, 5a) beziehungsweise die Ringkörper (7, 7a, 7', 7a') der Dichtung (5, 5a) aus einem formbeständigen Material bestehen, insbesondere PTFE bestehen.

10. Absperrorgan nach einem der Ansprüche 1 bis 9 **dadurch gekennzeichnet, dass** die Dichtung (5, 5a) wenigstens eine Kammer (12) aufweist oder in dem Gehäuse (1, 1a), insbesondere dem Dichtungssitz (9, 9a) eine Kammer (12) ausbildet.

11. Absperrorgan nach Anspruch 10, **dadurch gekennzeichnet, dass** sich die Kammer (12) umlaufend von einem Bereich (18) mit Wellenschaft (3) zu einem nächsten Bereich (18') mit Wellenschaft (3) erstreckt.

## Claims

1. A shutoff valve for pipes and the like, which has a housing (1, 1a) that incorporates at least one rotatable flap disk (2) which can be used to shut off a flow cross sectional area of the shutoff valve inside of the housing (1, 1a), and which has a seal (5, 5a) bordering the flow cross sectional area in the area of the shutoff valve, wherein the seal (5, 5a) consists of two annular ring bodies (7, 7a, 7', 7a') which abut each other, wherein the annular ring bodies (7, 7a, 7', 7a') of the seal (5, 5a) are aligned concentrically to each other, wherein a first annular ring body (7, 7a) of the seal (5, 5a) has a larger annular ring body height than a second annular ring body (7',7a') of the seal (5), wherein the annular ring bodies (7, 7a, 7', 7a') comprising the seal (5, 5a) butt against each other on the outside center to a closed position of the flap disk (2), **characterized in that** a shaft shank (3) of the flap disk (2) extends through the entire flap disk (2) .

2. The shutoff valve according to claim 1, **characterized in that** the seal (5, 5a) has at least one recess (14, 14') for the shaft shank (3) of the flap disk (2).

3. The shutoff valve according to claim 2, **characterized in that** the recess (14, 14') for the shaft shank (3) is formed by areas molded onto the respectively facing sides of the annular ring body (7, 7a, 7', 7a') of the seal (5, 5a) on the shaft shank (3).

4. The shutoff valve according to one of claims 2 or 3, **characterized in that** at least one continuous annular groove (16, 19) in the seal (5, 5a) is allocated to the recess (14, 14') for the shaft shank (3).

5. The shutoff valve according to one of claims 2 to 4, **characterized in that** the shaft shank (3) has at least one continuous annular groove (15) in an area (18, 18') of the recess (14, 14') of the seal (5, 5a).

6. The shutoff valve according to one of claims 1 to 5, **characterized in that** the annular ring bodies (7, 7a, 7', 7a') of the seal (5, 5a) have a positively interlocking offset (13) along its circumference, in particular its outer abutting circumference.

7. The shutoff valve according to claim 6, **characterized in that** the offset (13) is formed by a protruding part of the annular ring body (7', 7a') with the smaller annular ring body installation height and a correspondingly graduated area of the annular ring body (7, 7a) with the wider annular ring body installation height.

8. The shutoff valve according to one of claims 1 to 7, **characterized in that** the seal (5, 5a) in the housing (1, 1a) is pressed in a seal seat (9, 9a), which has a larger width on its side facing away from the flow cross sectional area than on its side facing the flow cross sectional area.

9. The shutoff valve according to one of claims 1 to 8, **characterized in that** the seal (5, 5a) or the annular ring bodies (7, 7a, 7', 7a') of the seal (5, 5a) consist of a dimensionally stable material, in particular PTFE.

10. The shutoff valve according to one of claims 1 to 9, **characterized in that** the seal (5, 5a) has at least one chamber (12), or forms a chamber (12) in the housing (1, 1a), in particular the seal seat (9, 9a).

11. The shutoff valve according to claim 10, **characterized in that** the chamber (12) extends continuously from one area (18) with shaft shank (3) to a next area (18') with shaft shank (3).

## Revendications

1. Organe d'arrêt pour tuyauteries et analogues, comportant un boîtier (1, 1a), dans lequel est réceptionnée au moins une rondelle de clapet (2) rotative, avec laquelle une surface transversale d'écoulement de l'organe d'arrêt peut-être forme à l'intérieur du boîtier (1, 1a) et pourvu d'un joint (5, 5a) délimitant la surface transversale d'écoulement dans la zone de l'organe d'arrêt, le joint (5, 5a) étant constitué en deux parties, en deux corps annulaires (7, 7a, 7', 7a') adjacents l'un à l'autre, les corps annulaires (7, 7a, 7', 7a') du joint (5, 5a) étant orientés de manière concentrique l'un par rapport à l'autre,
un premier corps annulaire (7, 7a) du joint (5, 5a) présentant une hauteur globale de corps annulaire supérieure à celle d'un deuxième corps annulaire (7', 7a') du joint (5),
les corps annulaires (7, 7a, 7', 7a') formant le joint (5, 5a) étant aboutés de manière excentrée en une position fermée de la rondelle de clapet (2)
**caractérisé**
**en ce que** la tige d'arbre (3) de la rondelle de clapet (2) s'étend à travers l'ensemble de la rondelle de clapet (2).

2. Organe d'arrêt selon la revendication 1, **caractérisé en ce que** le joint (5, 5a) comporte au moins un évidement (14, 14') pour la tige d'arbre (3) de la rondelle de clapet (2).

3. Organe d'arrêt selon la revendication 2, **caractérisé en ce que** l'évidement (14, 14') pour la tige d'arbre (3) est constitué de zones surmoulées sur la tige d'arbre (3), sur les faces respectivement dirigées l'une vers l'autre des corps annulaires (7, 7a, 7', 7a') du joint (5, 5a).

4. Organe d'arrêt selon l'une quelconque des revendications 2 ou 3, **caractérisé en ce que** dans le joint (5, 5a), au moins une rainure annulaire (16, 19) périphérique est associée à l'évidement (14, 14') pour la tige d'arbre (3).

5. Organe d'arrêt selon l'une quelconque des revendications 2 à 4, **caractérisé en ce que** la tige d'arbre (3) comporte dans une zone (18, 18') de l'évidement (14, 14') du joint (5, 5a) au moins une rainure annulaire (15) périphérique.

6. Organe d'arrêt selon l'une quelconque des revendications 1 à 5, **caractérisé en ce que** les corps annulaires (7, 7a, 7', 7a') du joint (5, 5a) comportent le long de leur circonférence, notamment de leur circonférence extérieure adjacente un décalage (13) s'engrenant par complémentarité de forme.

7. Organe d'arrêt selon la revendication 6, **caractérisé en ce que** le décalage (13) est constitué d'une partie saillante du corps annulaire (7', 7a') présentant la hauteur globale de corps annulaire la plus faible et d'une zone échelonnée en conséquence du corps annulaire (7, 7a) présentant la hauteur globale de corps annulaire la plus élevée.

8. Organe d'arrêt selon l'une quelconque des revendications 1 à 7, **caractérisé en ce que** le joint (5, 5a) est compressé dans le boîtier (1, 1a) dans un siège de joint (9, 9a), qui sur sa face opposée à la surface transversale d'écoulement présente une largeur supérieure à celle sur sa face dirigée vers la surface transversale d'écoulement.

9. Organe d'arrêt selon l'une quelconque des revendications 1 à 8, **caractérisé en ce que** le joint (5, 5a), respectivement les corps annulaires (7, 7a, 7', 7a') du joint (5, 5a) consistent dans une matière indéformable, notamment dans un PTFE.

10. Organe d'arret selon l'une quelconque des revendications 1 à 9, **caractérisé en ce que** le joint (5, 5a) comporte au moins une chambre (12) ou constitue une chambre (12) dans le boîtier (1, 1a), notamment dans le siège de joint (9, 9a).

11. Organe d'arret selon la revendication 10, **caractérisé en ce que** la chambre (12) s'étend de manière périphérique à partir d'une zone (18) avec tige d'arbre (3) vers une zone (18') suivante avec tige d'arbre (3).
